(19) Europäisches Patentamt
European Patent Office
Office européen des brevets

(11) EP 1 123 360 B1

(12) **FASCICULE DE BREVET EUROPEEN**

(45) Date de publication et mention de la délivrance du brevet:
**15.12.2004 Bulletin 2004/51**

(21) Numéro de dépôt: **99970105.5**

(22) Date de dépôt: **05.10.1999**

(51) Int Cl.⁷: **C09D 201/00**, C09D 109/00, C09D 125/06, C09D 133/00 // C09D201:00, C09D183:06

(86) Numéro de dépôt international:
**PCT/FR1999/002377**

(87) Numéro de publication internationale:
**WO 2000/020524 (13.04.2000 Gazette 2000/15)**

(54) **COMPOSITIONS DE REVETEMENTS CONTENANT DES SILICONES FONCTIONNALISEES**

BESCHICHTUNGSZUSAMMENSETZUNGEN ENTHALTEND FUNKTIONALISIERTE SILIKONE

COATING COMPOSITIONS CONTAINING FUNCTIONALISED SILICONES

(84) Etats contractants désignés:
**AT BE CH CY DE DK ES FI FR GB GR IE IT LI LU MC NL PT SE**
Etats d'extension désignés:
**RO SI**

(30) Priorité: **05.10.1998 FR 9812439**

(43) Date de publication de la demande:
**16.08.2001 Bulletin 2001/33**

(73) Titulaire: **RHODIA CHIMIE**
**92408 Courbevoie Cédex (FR)**

(72) Inventeurs:
- **DORGET, Michel**
**F-75019 Paris (FR)**
- **JOANICOT, Mathieu**
**Lawrenceville, NJ 08648 (US)**
- **MIGNANI, Gérard**
**F-69008 Lyon (FR)**
- **BRANLARD, Paul**
**F-69005 Lyon (FR)**

(56) Documents cités:
**EP-A- 0 520 466**
**EP-A- 0 561 668**
**EP-A- 0 635 526**
**FR-A- 2 738 012**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 123 360 B1

## Description

La présente invention concerne de nouvelles compositions de revêtements, notamment de peintures. Ces compositions peuvent être utilisées dans différentes applications telles que peinture à l'eau, crépis, lazures, imprégnations, revêtement semi-épais (RSE).

L'art antérieur n'indique pas de composition de revêtement apte à réticuler correctement et suffisamment par condensation, en un élastomère ou un réticulat, qui confère à l'application finale, par exemple sous forme de peinture, une résistance à l'abrasion humide (RAH) élevée, une imperméabilité à l'eau et une perméabilité à la vapeur d'eau satisfaisantes. En outre, l'art antérieur n'indique pas de compositions de revêtement ayant une stabilité au stockage élevée et pérenne (maintien de la teneur en COV ou en alcools produits *in situ* inférieur à un seuil de rupture de la composition).

L'un des objectifs essentiels de la présente invention est donc de proposer une nouvelle composition de revêtement conférant à l'application finale une hydrofugation efficace, c'est-à-dire une résistance à l'abrasion humide (RAH) élevée, une imperméabilité à l'eau, une perméabilité à la vapeur d'eau et un effet perlant satisfaisants. En outre, la nouvelle composition de revêtement possède une stabilité au stockage élevée et pérenne.

Plus concrètement, la nouvelle composition de revêtement, mise au point et faisant l'objet de la présente invention, comprend :

(A) 3 à 30 parties (extrait sec à environ 50% en poids) d'un latex constitué de particules de (co)polymères organiques présentant une température de transition vitreuse comprise entre -20°C et 50°C,

(B) 0,05 à 5 parties (extrait sec à environ 65% en poids) d'une émulsion de polyorganosiloxane époxyfonctionnalisé,

(C) et 100 (extrait sec à environ 75% en poids) parties de charges minérales.

Dans le cadre de l'invention, les parties (A) et (B) forment ce que l'on appelle le liant de la composition de revêtement.

Le latex utilisé dans le cadre de la composition selon l'invention est préparé à partir de monomères polymérisables (1) choisis parmi le styrène, le butadiène, les esters acryliques et/ou les nitriles vinyliques.

Par esters acryliques, on désigne les esters de l'acide acrylique et de l'acide méthacrylique avec les alcanols en $C_1$-C $_{12}$, de préférence $C_1$-$C_8$, tels que l'acrylate de méthyle, l'acrylate d'éthyle, l'acrylate de propyle, l'acrylate de n-butyle, l'acrylate d'isobutyle, l'acrylate de 2-éthylhexyle, le méthacrylate de méthyle, le méthacrylate d'éthyle, le méthacrylate de n-butyle, le méthacrylate d'isobutyle.

Les nitriles vinyliques incluent ceux ayant de 3 à 12 atomes de carbone, en particulier l'acrylonitrile et le méthacrylonitrile.

Le styrène peut-être remplacé en totalité ou en partie par l'améthylstyrène ou le vinyltoluène.

D'autres monomères (2) éthyléniquement insaturés polymérisables avec les monomères (1) ci-dessus, et dont la quantité peut aller jusqu'à 40 % en poids du total des monomères, sont également utilisables pour la préparation du latex de la composition selon l'invention. On peut citer :

(a) les esters vinyliques d'acide carboxylique comme l'acétate de vinyle, le versatate de vinyle, le propionate de vinyle,

(b) les acides mono-et di-carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leur dérivés N-substitués,

(c) les amides des acides carboxyliques insaturés comme l'acrylamide, le méthacrylamide, le N-méthalolacrylamide ou -méthacrylamide,

(d) les monomères éthyléniques comportant un groupe acide sulfonique et ses sels alcalins ou d'ammonium, par exemple l'acide vinylsulfonique, l'acide vinylbenzène sulfonique, l'acide a-acrylamido méthylpropane-sulfonique, le 2- sulfoéthylèneméthacrylate,

(e) les monomères éthylèniquement insaturés comportant un groupe amino secondaire, tertiaire ou quaternaire ou un groupe hétérocyclique contenant de l'azote, par exemple les vinylpyridines, le vinylimidazole, les (meth) acrylates d'aminoalkyle et les (meth)acrylamides d'aminoalkyle comme le diméthylaminoéthylacrylate ou méthacrylate, le ditertiobutylamino-éthylacrylate ou -méthacrylate, le diméthyl amino méthylacrylamide ou -méthacrylamide de même que les monomères zwitterioniques comme l'acrylate de sulfopropyl (diméthyl) aminopropyle

(f) les esters des acides (meth) acryliques avec des alcanediols contenant de préférence 2-8 atomes de carbone tels que le mono (meth) acrylate de glycol, le mono(meth)acrylate d'hydroxypropyle, le mono(meth) acrylate de 1-4 butanediol ainsi que les monomères comportant deux doubles liaisons polymérisables comme le diméthacrylate d'éthylène-glycol.

Selon une variante préférée pour le choix du latex, celui-ci contient en poids :

- 25-90 %, et de préférence 45-75 %, de styrène et/ou acrylonitrile,
- 75-10 %, et de préférence 55-25 %, de butadiène et/ou acrylates,
- 0-20 %, et de préférence 1-10 %, d'acide carboxylique insaturé.
- et 0-40 %, et de préférence 0-15 %, d'autres monomères éthyléniques insaturés.

La polymérisation du latex est réalisée de manière connue en soi en émulsion aqueuse des monomères polymérisables en présence d'au moins un initiateur radicalaire et de préférence d'un agent de transfert, par exemple du type mercaptan avec une concentration en monomères dans le milieu réactionnel comprise généralement entre 20 et 60 % en poids.

La polymérisation peut être réalisée en continu, en discontinu ou semi-continu avec introduction d'une partie des monomères en continu et être du type "ensemencé" ou "incrémentale" selon toute variante connue pour l'obtention des particules de structure homogène et hétérogène.

Pour la préparation du latex, à titre d'exemple non limitatif, on se référera aux modes opératoires décrits dans le brevet EP 599 676 au nom de la présente demanderesse.

Comme exemples de charges minérales de la composition selon l'invention, on peut citer le quartz broyé, le kaolin, la silice de combustion, la silice de précipitation, le carbonate de calcium, le sulfate de barium, l'oxyde de titane, le talc, l'alumine hydratée, la bentonite, le sulfoaluminate de calcium, etc.

Les polyorganosiloxanes époxyfonctionnalisés de la composition selon l'invention sont linéaires et/ou cycliques. Au sein d'une même composition de revêtement. on peut utiliser des polyorganosiloxanes identiques ou différents. Ces polyorganosiloxanes sont constitués de motifs de formule (I) et terminés par des motifs de formule (II) et/ou constitués de motifs de formule (I) représentées ci-dessous :

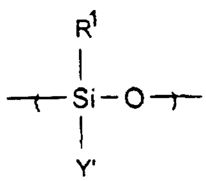

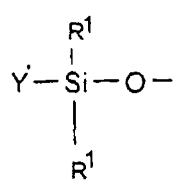

(II)

dans lesquelles :

- les symboles $R^1$ sont semblables ou différents et représentent :
  - un radical alkyle linéaire ou ramifié contenant 1 à 8 atomes de carbone, les radicaux alkyles étant de préférence méthyle, éthyle, propyle, et octyle,
  - un radical cycloalkyle contenant entre 5 et 8 atomes de carbone cycliques, éventuellement substitué,
  - un radical aryle contenant entre 6 et 12 atomes de carbone pouvant être substitué, de préférence phényle ou dichlorophényle,
  - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles **Y'** sont semblables ou différents et représentent :

- le groupement **$R^1$**,
- et/ou un groupement époxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
- et l'un au moins des symboles **Y'** représentant un groupement époxyfonctionnel.

Les polyorganosiloxanes linéaires peuvent être des huiles de viscosité dynamique à 25°C, de l'ordre de 10 à 10 000 mPa.s à 25°C, généralement de l'ordre de 50 à 5 000 mPa.s à 25°C et, plus préférentiellement encore, de 100 à 600 mPa.s à 25°C, ou des gommes présentant une masse moléculaire de l'ordre de 1 000 000.

Lorsqu'il s'agit de polyorganosiloxanes cycliques, ceux-ci sont constitués de motifs **(II)** qui peuvent être, par exemple, du type dialkylsiloxy ou alkylarylsiloxy. Ces polyorganosiloxanes cycliques présentent une viscosité de l'ordre de 1 à 5 000 mPa.s.

Comme exemples de radicaux divalents reliant un groupement organofonctionnel du type époxy, on peut citer ceux inclus dans les formules suivantes :

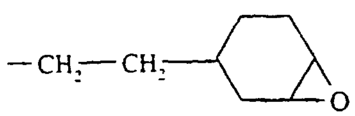 ; 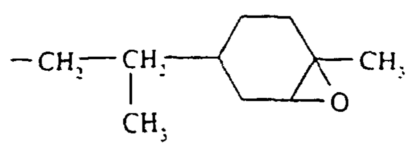

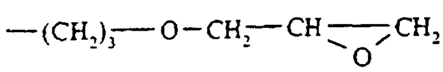 ; 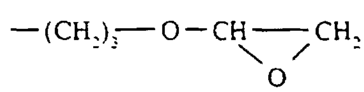

La viscosité dynamique à 25°C, de toutes les silicones considérées dans la présente description peut être mesurée à l'aide d'un viscosimètre BROOKFIELD, selon la norme AFNOR NFT 76 102 de février 1972.

L'obtention de tels polyorganosiloxanes fonctionnalisés est parfaitement à la portée de l'homme du métier de la chimie des silicones.

Selon une variante avantageuse, la composition de l'invention contient de 5 à 100 groupements organofonctionnels pour 100 motifs Si, et de préférence de 20 à 40 ; ce qui permet d'obtenir un excellent compromis entre la stabilité de la composition et son pouvoir hydrofugeant.

Outre les trois constituants principaux de la composition de revêtement de l'invention, celle-ci peut contenir 0,1 à 10 parties (sec) d'additifs tels que agent(s) anti-mousse(s), biocide(s), tensio-actif(s), agent(s) rhéologique(s), agent(s) de coalescence. agent(s) dispersant(s), agent(s) neutralisant(s) et agent(s) épaississant(s).

Pour la préparation de la composition de revêtement, on mélange les différents constituants de façon connue en soi.

La composition de revêtement selon l'invention peut être appliquée selon les techniques habituelles. A titre d'exemple, elle peut être appliquée sur les surfaces par tout moyen convenable tel que pinceau, brosse, pulvérisateur, etc... Les surfaces sur lesquelles la composition de revêtement selon l'invention est applicable sont de nature diverse : par exemple, métal tel que l'aluminium, bois, ciment, brique avec ou sans enduction préalable par un primaire d'adhérence.

Les Exemples et Tests suivants sont donnés à titre illustratif. Ils permettent notamment de mieux comprendre l'invention et de faire ressortir tous ses avantages et entrevoir quelques variantes de réalisation.

**<u>Exemples et tests.</u>**

Les exemples et tests démontrent une abrasion humide élevée, une imperméabilité à l'eau et une perméabilité à la vapeur d'eau satisfaisantes des revêtements obtenues à partir de compositions selon l'invention. En outre, la mesure de l'angle de gouttes d'eau met en évidence les propriétés porlantes des compositions de l'invention.

Différents tests ont été utilisés :

- Test de la Résistance à l'Abrasion Humide (RAH) : norme DIN 53778.
- Test de la perméabilité à la vapeur d'eau : norme DIN 52615.

- Test d'absorption d'eau : norme DIN 52617.
- et Mesure de l'angle de goutte d'eau.

Pour les compositions de l'exemple F, les tests ont été modifiés. Ces modifications sont précisées au paragraphe II de l'exemple F.

**Exemple A.**

**I. Compositions de peinture mate écologique.**

(i) Les compositions de peintures testées sont données dans le tableau 1 et contiennent :

- 130 g de carbonate de calcium Hydrocarb 90 (Extrait Sec = 75%),
- 20 g de latex DS 1003 de Rhodia Chimie (Extrait sec = 50%, à base de styrène, acrylate de butyle et acide acrylique)
- et 0,15 g d'émulsion de polyorganosiloxane (Extrait sec = 65%) répondant à la formule **(III)** ci-dessous :

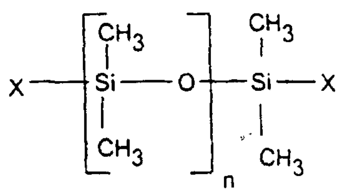

(III)

Pour les compositions A-4 à A-7 de l'invention, X du polyorganosiloxane est égal à:

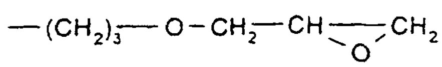

Pour la composition A-1, X du polyorganosiloxane est $CH_3$. Pour les compositions A-2 et A-3, X est égal à OH.

(ii) Mise en émulsion des polyorganosiloxanes testés.

La mise en émulsion est effectuée par la méthode d'émulsification directe concentrée en utilisant 5% de tensioactif Soprophor BSU (tristyryl phénol éthoxylé), 65% de polyorganosiloxane et 30% d'eau.

**II. Test de la résistance à l'abrasion humide.**

Ce test de la résistance à l'abrasion humide se base sur le test correspondant à la norme DIN 53778.
La composition de peinture est préparée. Puis, elle est soit couchée immédiatement, ou soit couchée après une semaine de vieillissement à 55°C (en pot), sur un support rigide de Lénéta (200 microns humides).
Ensuite, la peinture est séchée 24h à 55°C puis re-conditionnée 24h à 23°C et 55% d'humidité relative.
Le feuil sec est ensuite abrasé en condition humide. On compte le nombre de cycles d'abrasion qu'il peut supporter.

**III. Résultats.**

Les résultats sont donnés tableau 1.

Tableau 1

| Compositions | n | $RAH_{immédiat}$ | $RAH_{vieilli}$ |
|---|---|---|---|
| A-0 (pas de polyorganosiloxane) | / | 450 | 470 |

Tableau 1 (suite)

| Compositions | n | $RAH_{immédiat}$ | $RAH_{vieilli}$ |
|---|---|---|---|
| A-1 | 13 | 470 | / |
| A-2 | 33 | 390 | / |
| A-3 | 81 | 500 | / |
| A-4 | 8 | 1300 | 1100 |
| A-5 | 15 | 760 | 790 |
| A-6 | 30 | 720 | 730 |
| A-7 | 100 | 510 | 550 |

**IV. Commentaires.**

Les compositions selon l'invention permettent d'augmenter la RAH.
Les compositions A-0 à A-3 sont inefficaces.
Le gain de la RAH est identique après une semaine de vieillissement à 55°C pour les compositions selon l'invention.

**Exemple B.**

**I. Compositions de peinture mate écologique : variation de la teneur en polyorganosiloxane**.

(i) Les compositions de peintures testées sont données tableau 2 et contiennent :

- 130 g sec de carbonate de calcium Hydrocarb 90 (ES = 75%).
- 20 g sec de latex DS 1003 (ES = 50%)
- et 0,15g sec de polyorganosiloxane de la composition A-5.

(ii) La mise en émulsion du polyorganosiloxane est identique à précédemment.

**II. Tests effectués**

(i) Mesure de la RAH.
La mesure de la RAH est effectuée comme précédemment.
(ii) Mesure de l'angle de goutte d'eau.
Sur des feuils secs identiques, la mesure d'angle de la goutte d'eau est effectuée. Pour cela. on mesure l'angle que fait cette goutte d'eau avec la surface du feuil.

**III. Résultats.**

Les résultats sont donnés tableau 2.

Tableau 2

| **Teneur (x en g)** | 0 | 0,15 | 0,5 | 1 | 1,5 | 3 |
|---|---|---|---|---|---|---|
| **$RAH_{immédiat}$** | 690 | 980 | 1700 | 2300 | 4200 | 5400 |
| **Angle goutte d'eau** | 73° | 87 | 94 | 97 | 100 | 97 |

**IV. Commentaire.**

Plus la concentration en polyorganosiloxane est élevée, plus la RAH augmente.

En outre, plus la concentration en polyorganosiloxane est élevée, plus l'angle que fait la goutte d'eau augmente. Au-dessus de 90°, la surface est perlante. Donc, on observe un effet perlant satisfaisant à partir de 3 % de polyorganosiloxane par rapport au latex (poids/poids).

<u>**Exemple C.**</u>

**I. Compositions de peinture mate écologique.**

(i) Les compositions de peintures testées sont données tableau 3 et contiennent :

- 130 g de carbonate de calcium Hydrocarb 90 (Extrait Sec = 75%),
- 20 g de latex DS 1003 de Rhodia Chimie (Extrait sec = 50%)
- et 0,15 g d'émulsion de polyorganosiloxane linéaire (Extrait sec = 65%) répondant à la formule (IV) ci-dessous :

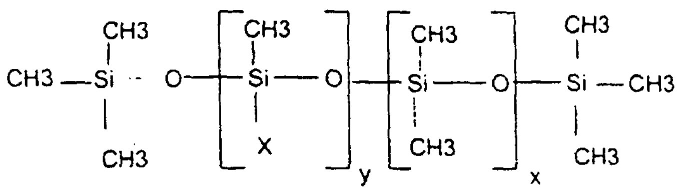

(IV)

dans laquelle X est égale à :

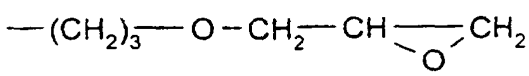

Tableau 3

| Compositions | x | y | x+y | Concentration en motif Si- époxy/ total de motifs Si |
|---|---|---|---|---|
| C-1 | 23 | 2 | 25 | 7% |
| C-2 | 11 | 2 | 13 | 13% |
| C-3 | 21 | 4 | 25 | 15% |
| C-4 | 6 | 2 | 8 | 20% |
| C-5 | 9 | 4 | 13 | 27% |

(ii) La mise en émulsion des polyorganosiloxanes est effectuée comme précédemment.

**II. Test effectué.**

La mesure de la RAH est effectuée comme précédemment.

**III. Résultats.**

Voir Tableau 4.

Tableau 4

| Compositions | $RAH_{immédiat}$ | $RAH_{vieilli}$ |
|---|---|---|
| pas de polyorganosiloxane | 600 | 530 |
| C-1 | 950 | 960 |
| C-2 | 1000 | 1100 |
| C-3 | 990 | 990 |
| C-4 | 1500 | 1400 |
| C-5 | 1600 | 1700 |

**IV. Commentaire.**

Les compositions selon l'invention avec un polyorganosiloxane dont les fonctions époxy ne sont pas en bout de chaîne sont tout aussi efficaces qu'un polyorganosiloxane dont les fonctions époxy sont en bout de chaîne.

Plus le taux de greffage est élevé plus la RAH est importante. On est toujours stable après 1 semaine de vieillissement à 55°C.

**Exemple D.**

**I. Compositions de peinture mate écologique avec variation du taux de Si-époxy / total de motifs Si.**

(i) Les compositions de peintures testées sont données tableau 5 et contiennent :

- 130 g de carbonate de calcium Hydrocarb 90 (Extrait Sec = 75%),
- 20 g de latex DS 1003 de Rhodia Chimie (Extrait Sec = 50%)
- et 0,15 g d'émulsion de polyorganosiloxane linéaire (Extrait sec = 65%) répondant à l'une des formules ci-dessous :

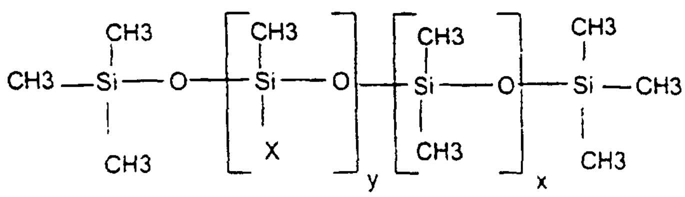

(IV)

ou

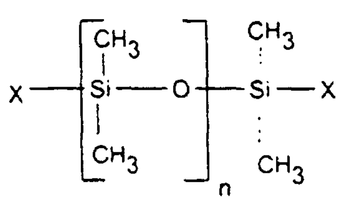

(III)

dans lesquelles X est égale à :

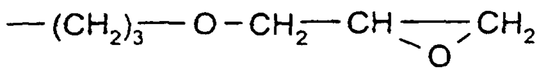

Tableau 5

| Compositions | X | y | n | Concentration en motif Si-époxy / total de motifs Si) |
|---|---|---|---|---|
| D-1 (formule IV) | 8 | 7 | / | 41% |
| D-2 (formule IV) | 3 | 8 | / | 62% |
| D-3 (formule IV) | 0 | 20 | / | 91% |
| D-4 (formule III) | / | / | 1 | 100% |

(ii) La mise en émulsion des polyorganosiloxanes est effectuée comme dans les exemples précédents.

**II. Test effectué : mesure de la RAH.**

La mesure de la RAH est effectuée comme précédemment.

**III. Résultats :**

Les résultats sont donnés dans le tableau 6.

Tableau 6.

| Compositions | RAHimmediat | RAHvieilli |
|---|---|---|
| D-0 (sans polyorganosiloxane) | 790 | 630 |
| D-1 | 1800 | 1600 |
| D-2 | 2600 | 1600 |
| D-3 | 4600 | 1600 |
| D-4 | 62000 | 1400 |

**VI. - Commentaire.**

Plus le pourcentage de Si-époxyl total de motifs Si est élevé, plus la composition est efficace sur des bains frais.

Toutefois, pour les compositions vieillies, les résultats de RAH ne sont pas similaires à ceux des compositions testées immédiatement. En effet, on remarque qu'au-delà de 40% de Si-époxy, la différence de RAH immédiate et RAH vieillie est très importante : ce qui signifie que les compositions ne sont pas stables.

Donc, le taux optimal de Si-époxyl total de motifs Si du polyorganosiloxane est en dessous de 40%.

<u>**Exemple E.**</u>

**I. Compositions de peintures extérieures respirantes.**

Les compositions préparées contiennent toutes 100 g de carbonate de calcium Hydrocarb 90, et 12 g de latex DS 910 de Rhodia chimie avec 10% d'agent de coalescence Texanol de la société Eastman Kodak.

(i) Les compositions selon l'invention contiennent un 3eme composant , c'est-à-dire, X g d'émulsion de polyorganosiloxane de formule :

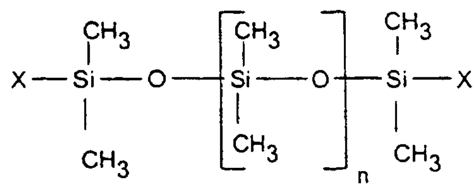

dans laquelle n est égal à 8 et X est égal à :

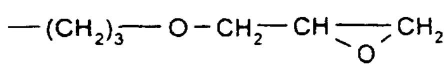

Elles correspondent aux compositions E-6 à E-9. Les quantités de polyorganosiloxanes varient au sein des compositions E-6 à E-9 et sont données dans le tableau 7. La mise en émulsion du polyorganosiloxane est effectuée de manière identique à celle utilisée à l'exemple 1.

(ii) Les compositions E-2 à E-5 contiennent à la place du polyorganosiloxane, une résine silicone de référence Rhodorsil 865A de la société Rhodia Chimie. Les quantités de résine varient au sein des compositions E-2 à E-5 et sont données dans le tableau 7.

**II. Tests effectués :**

(i) RAH et Angle de gouttes d'eau.

La RAH et l'angle de goutte d'eau sont mesurés comme dans les exemples précédents.

(ii) Perméabilité à l'eau.

La mesure de la perméabilité à l'eau est effectuée en accord avec une procédure basée sur la norme DIN n° 52617.

La composition de peinture est couchée sur un carreau de faïence (épaisseur de la peinture : 2 mm). Après évaporation partielle de l'eau, la peinture semi-sèche est découpée et décollée en disque de 40 mm de diamètre ; ce qui permet d'obtenir une peinture non supportée.

Après séchage et re-conditionnement de la peinture, celle-ci est plongée dans l'eau. Un suivi gravimétrique permet d'accéder à la quantité d'eau reprise par la peinture.

A partir de la courbe des relevés obtenus, le coefficient d'absorption d'eau W est déterminé en fonction de la formule : $m(t) = m_0 + WS.t^{1/2}$, où m est la masse du composite, S sa surface (en comptant les deux faces) et t le temps.

(iii) Perméabilité à la vapeur d'eau.

La mesure de la perméabilité à la vapeur d'eau est effectuée en accord avec une procédure basée sur la norme DIN n° 52615. Pour cela, on détermine le facteur Sd qui est égal à 0,09/Pe ; ce facteur Sd correspond à l'épaisseur d'air qui aurait la même perméabilité qu'une peinture de 100 microns d'épaisseur (Pe est en $g^{+1}h^{-1}m^{-2}mmHg^{-1}$ et Sd en m).

La peinture non supportée, obtenue comme précédemment, est utilisée comme bouchon sur un pot rempli d'eau.

Le pot est placé à une température de 23 °C et une humidité relative de 50%. La quantité d'eau contenue dans le pot est suivie en fonction du temps.

La perméabilité à la vapeur d'eau Pe est définie par : $m(t) = m_0 - (Pe.S.\Delta p).t$, où m est la masse d'eau, $\Delta p$ la différence de pression partielle de l'eau entre le pot et l'atmosphère, soit 10,54 mmHg.

**III. Résultats.**

Les résultats sont donnés dans le tableau 7.

**IV. Commentaires.**

On note une nette amélioration de la RAH avec les compositions de l'invention par rapport aux compositions de peintures dans lesquelles le 3eme composant est une résine.

La perméabilité à l'eau est nettement améliorée pour les compositions selon notre invention. De la même manière l'aspect perlant de la peinture est renforcé par les compositions selon l'invention E-6 à E-9.

Tableau 7.

| Compositions | Quantité du 3eme Composant | CPV % | RAH | Sd m | W Kg/m$^2$h$^{1/2}$ | Angle de goutte d'eau |
|---|---|---|---|---|---|---|
| E-0 | 0 | 77 | 13000 | 0,0103 | 0,065 | 75 |
| E-2 | 2 g | 73 | 5200 | 0,0124 | 0,055 | 73 |
| E-3 | 5 g | 69 | - | 0,0118 | 0,047 | 66 |
| E-4 | 10 g | 63 | 2500 | 0,0133 | 0,06 | 100 |
| E-5 | 20 g | 54 | 1600 | - | 0,025 | 91 |
| E-6 | 0,5 g | 75 | - | 0,0124 | 0,015 | 116 |
| E-7 | 1 g | 74 | - | 0,0125 | 0,013 | 119 |
| E-8 | 1,5 g | 73 | - | 0,0137 | 0,009 | 120 |
| E-9 | 2 g | 73 | 79000 | 0,0144 | 0,008 | 109 |

CPV = capacité pigmentaire volumique.

**Exemple F.**

**I. Compositions de peintures respirantes (CPV = 70 %).**

(i) Les peintures testées E10 à E13 sont formulées à partir d'une pâte pigmentaire dont la composition est donnée tableau 8. La dispersion de la pâte s'effectue à 3000 tr/min durant 15 minutes.

(ii) Les peintures contiennent d'autres ingrédients ajoutés au sein des dispersions selon l'invention. Le type et la quantité des ingrédients complémentaires sont indiqués tableau 9. Après ajout, le milieu est agité à 500 tr/min durant 15 minutes.

La mise en émulsion des silicones utilisées est effectuée de manière identique à celle utilisée à l'exemple 1.

Le polyorganosiloxane utilisé au sein de l'émulsion selon l'invention est de formule (IV) où y est égal à 4, x est égal à 9 et la fonction X est égale à :

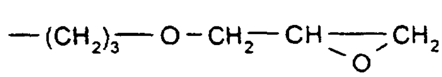

Tableau 9

| | E10 | E11 | E12 | E13 |
|---|---|---|---|---|
| Dispersion styrène-acrylique avec ES = 50 % (Rhodopas® DS910 de Rhodia Chimie). | 9,2 | 9,2 | 15,8 | 9,4 |
| Emulsion de silicone non époxydé avec ES = 42% (Rhodorsil® 865A de Rhodia Chimie). | 10,0 | 0 | 0 | 0 |
| Emulsion de silicone non époxydé avec ES de 53 %(Rhodorsil® 1854 PEX de Rhodia Chimie). | 0 | 8 | 0 | 6,9 |
| Polyorganosiloxane époxydé de formule (IV) avec ES de 50 %. | 0 | 0 | 1,9 | 1 |
| Eau | 0,5 | 2,5 | 2 | 2,4 |

Tableau 8

| Ingrédients | Poids | Fonctions |
|---|---|---|
| Eau | 20,1 | |
| Hexamétaphosphate de Na (10 % $H_2O$) | 0,5 | Agent neutralisant |
| Proxel GXL de Zeneca | 0,3 | Biocide |
| Rhodoline DP 1120 de Rhodia Chimie | 0,3 | Agent dispersant |
| Rhodoline DF 6002 de Rhodia Chimie | 0,2 | Agent antimousse |
| Natrosol 250H de Aqualon | 0,2 | Agent épaississant |
| RCL 568 de Millenium | 12,1 | Dioxyde de titane |
| Omyacarb SGU de Omya | 24,1 | Charge |
| Calibrite SL de Omya | 10,1 | Charge |
| Talc 10 MO de Luzenac | 4 | Charge |
| Plastorit 000 de Luzenac | 4 | Charge |
| Celite 281 de Manville | 3 | Charge |
| Texanol de Eastman | 1,1 | Agent de coalescence |
| Rhodoline RH 5210 de Rhodia Chimie | 0,3 | Agent épaississant |

**II. Tests effectués.**

(i) RAH selon la norme DIN 53778 partie 2.

Ce facteur exprimé en nombre de cycles représente l'aptitude d'un feuil de peinture d'épaisseur définie à résister à l'action abrasive exercée par le mouvement de va et vient d'une brosse en présence d'une solution à base

de tensioactif.

(ii) Perméabilité à la vapeur d'eau.

La mesure de la perméabilité à la vapeur d'eau est effectuée en accord avec une procédure basée sur la norme EN n° 1062-3.

On calcule le coefficient Sd, exprimé en mètre, qui représente l'épaisseur d'air statique qui possède la même perméabilité à la vapeur d'eau.

Ce coefficient est obtenu par un calcul à partir de mesures de pertes de poids d'une coupelle remplie d'eau et d'une solution de dihydrogénophosphate d'ammonium et fermée par un support en polyéthylène enduit de la peinture à évaluer.

< :perméabilité à la vapeur d'eau :

$$V = 240 \times m / A \times t \ (g.m^2/24\ h)$$

A : surface de l'échantillon : 50,27 $cm^2$
m : perte de masse mg
t : temps 72 h
Sd : 21/V (m)

(iii) Perméabilité à l'eau.

La mesure de la perméabilité à l'eau est effectuée en accord avec une procédure basée sur la norme EN n° 1062-2.

On calcule le facteur W, exprimé en kg $m^{-2}h^{-0,5}$ qui représente l'aptitude du revêtement de peinture à absorber l'eau liquide (par unité de surface et de temps). Il est obtenu par pesée : on suit la prise de poids d'un carreau de gré enduit de la peinture à tester et maintenu au contact d'une surface saturée d'eau.

**III. Résultats.**

Les résultats sont donnés dans le tableau 10.

Tableau 10.

| | Capacité pigmentaire volumique CPV | RAH (cycles) | Sd (m) | W ($kg/m^2h^{1/2}$) | Angle de goutte d'eau (°) |
|---|---|---|---|---|---|
| E10 | 70 % | 1500 | 0,05 | 0,16 | 80 |
| E11 | 70% | 3800 | 0,03 | 0,14 | 80 |
| E12 | 70% | >>5000 | 0,03 | 0,03 | 130 |
| E13 | 70% | 4200 | 0,03 | 0,07 | 120 |

**IV. Commentaires.**

On note une amélioration de la RAH avec les compositions de l'invention par rapport aux compositions dans lesquelles on introduit des silicones non époxydées.

La perméabilité à l'eau est améliorée pour les compositions selon notre invention. De plus, l'aspect perlant des peintures selon l'invention est renforcé.

## Revendications

**1.** Composition de revêtement comprenant :

(A) 3 à 30 parties (extrait sec à environ 50% en poids) d'un latex constitué de particules de (co)polymères organiques présentant une température de transition vitreuse comprise entre -20°C et 50°C,

(B) 0,05 à 5 parties (extrait sec à environ 65% en poids) d'une émulsion de polyorganosiloxane époxyfonctionnalisé constitué de motifs de formule (I) et terminé par des motifs de formule (II) et/ou constitué de motifs de formule (I) représentées ci-dessous ;

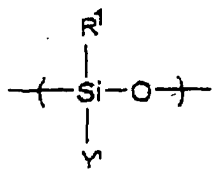 (I) 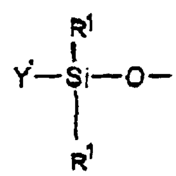 (II)

dans lesquelles :

- les symboles $R^1$ sont semblables ou différents et représentent :
  - un radical alkyle linéaire ou ramifié contenant 1 à 8 atomes de carbone, les radicaux alkyles étant de préférence méthyle, éthyle, propyle, et octyle,
  - un radical cycloalkyle contenant entre 5 et 8 atomes de carbone cycliques, éventuellement substitué,
  - un radical aryle contenant entre 6 et 12 atomes de carbone pouvant être substitué, de préférence phényle ou dichlorophényle,
  - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles Y' sont semblables ou différents et représentent :
  - le groupement $R^1$,
  - et/ou un groupement époxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
  - et l'un au moins des symboles Y' représentant un groupement époxyfonctionnel.

(C) et 100 (extrait sec à environ 75% en poids) parties de charges minérales.

**2.** Composition selon la revendication 1 **caractérisée en ce que** le latex est préparé à partir de (1) monomères polymérisables choisi parmi le styrène, le butadiène, les esters acryliques et/ou les nitriles vinyliques.

**3.** Composition selon la revendication 2 **caractérisée en ce que** la préparation de latex comprend d'autres monomères (2) éthyléniquement insaturés polymérisables avec les monomères (1) ci-dessus, et dont la quantité peut aller jusqu'à 40 % en poids du total des monomères, les autres monomères étant choisis parmi :

(a) les esters vinyliques d'acide carboxylique comme l'acétate de vinyle, le versatate de vinyle, le propionate

de vinyle,

(b) les acides mono et di-carboxyliques Insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leur dérivés N-substitués.

(c) les amides des acides carboxyliques insaturés comme l'acrylamide, le méthacrylamide, le N-méthalolacrylamide ou -méthacrylamide.

(d) les monomères éthyléniques comportant un groupe acide sulfonique et ses sels alcalins ou d'ammonium par exemple l'acide vinylsulfonique, l'acide vinylbenzène sulfonique, l'acide a-acrylamido méthylpropane-sulfonique, le 2-sulfoéthylèneméthacrylate.

(e) les monomères éthylèniquement insaturés comportant un groupe amino secondaire, tertiaire ou quaternaire ou un groupe hétérocyclique contenant de l'azote par exemple les vinylpyridines, le vinylimidazole, les (méth)acrylates d'aminoalkyle et les (méth)acrylamides d'aminoalkyle comme le diméthylaminoéthylacrylate ou méthacrylate, le ditertiobutylamino-éthylacrylate ou -méthacrylate, le diméthyl amino méthylacrylamide ou -méthacrylamide de même que les monomères zwitterioniques comme l'acrylate de sulfopropyl (diméthyl) aminopropyle

(f) les esters des acides (meth) acryliques avec des alcanediols contenant de préférence 2-8 atomes de carbone tels que le mono (meth) acrylate de glycol, le mono(meth)acrylate d'hydroxypropyle, le mono(meth) acrylate de 1-4 butanediol ainsi que les monomères comportant deux doubles liaisons polymérisables comme le diméthacrylate d'éthylène-glycol.

**4.** Composition selon la revendication 3 **caractérisée en ce que** le latex comprend en poids

- 25-90 %, et de préférence 45-75 %, de styrène et/ou acrylonitrile,
- 75-10 %, et de préférence 55-25 %, de butadiène e/ou acrylates,
- 0-20 %, et de préférence 1-10 %, d'acide carboxylique insaturé,
- et 0-40 %, et de préférence 0-15 %, d'autres monomères éthyléniques insaturés.

**5.** Composition selon l'une quelconque des revendications précédentes **caractérisée en ce que** les groupements époxyfonctionnels sont choisis parmi les groupements suivants :

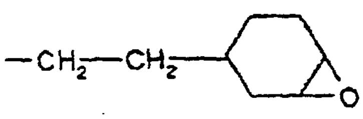 . 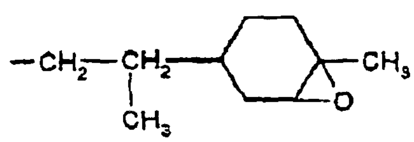 .

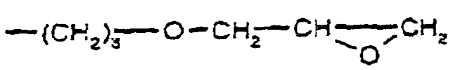 . et 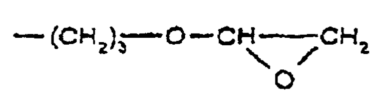

**6.** Composition selon l'une quelconque des revendications précédentes **caractérisée en ce que** le revêtement est une peinture.

**7.** Liant pour peinture à base de :

(A) 3 à 30 parties (extrait sec à environ 50% en poids) d'un latex constitué de particules de (co)polymères organiques présentant une température de transition vitreuse comprise entre -20°C et 50°C,

(B) 0,05 à 5 parties (extrait sec à environ 65% en poids) d'une émulsion de polyorganosiloxane époxyfonctionnalisé constitué de motifs de formule (I) et terminé par des motifs de formule (II) et/ou constitué de motifs de formule (I) représentées ci-dessous :

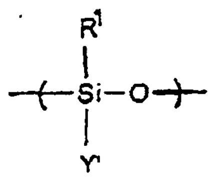 (I) 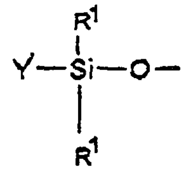 (II)

dans lesquelles :

- les symboles $R^1$ sont semblables ou différents et représentent :

    · un radical alkyle linéaire ou ramifié contenant 1 à 8 atomes de carbone, les radicaux alkyles étant de préférence méthyle, éthyle, propyle, et octyle,
    · un radical cycloalkyle contenant entre 5 et 8 atomes de carbone cycliques, éventuellement substitué,
    · un radical aryle contenant entre 6 et 12 atomes de carbone pouvant être substitué, de préférence phényle ou dichlorophényle,
    · une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,

- les symboles Y' sont semblables ou différents et représentent :

    · le groupement $R^1$,
    · et/ou un groupement époxyfonctionnel, relié au silicium du polyorganosiloxane par l'intermédiaire d'un radical divalent contenant de 2 à 20 atomes de carbone et pouvant contenir au moins un hétéroatome, de préférence de l'oxygène,
    · et l'un au moins des symboles Y' représentant un groupement époxyfonctionnel.

**8.** Utilisation d'une émulsion de polyorganosiloxane époxyfonctionnalisé tel que défini à la revendication précédente pour la réalisation d'un liant de peinture.

**9.** Utilisation d'une émulsion de polyorganosiloxane époxyfonctionnalisé tel que défini à la revendication 7 comme additif hydrofugeant pour la réalisation d'un liant de peinture.

**Patentansprüche**

**1.** Beschichtungszusammensetzung, enthaltend:

(A) 3 bis 30 Teile (Trockenextrakt von etwa 50 Gew.-%) eines Latex, welcher aus Teilchen organischer (Co-) Polymere besteht, mit einer Glasübergangstemperatur von -20 °C bis 50 °C,

(B) 0,05 bis 5 Teile (Trockenextrakt von etwa 65 Gew.-%) einer Emulsion eines epoxyfunktionalisierten Polyorganosiloxans, welches aus Einheiten der Formel (I) besteht und terminiert ist mit Einheiten der Formel (II) und/oder aus Einheiten der Formel (I) besteht, wie sie jeweils nachfolgend dargestellt sind:

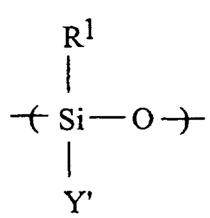 (I) 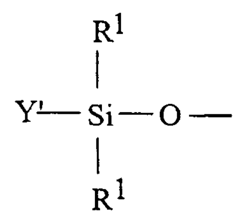 (II)

wobei

- die Symbole $R^1$ gleich oder verschieden sind und darstellen:

    - einen linearen oder verzweigten Alkylrest mit 1 bis 8 Kohlenstoffatomen, wobei die Alkylreste vorzugsweise Methyl, Ethyl, Propyl und Octyl sind,

    - einen gegebenenfalls substituierten Cycloalkylrest mit 5 bis 8 Ringkohlenstoffatomen,

    - einen Arylrest mit 6 bis 12 Kohlenstoffatomen, welcher vorzugsweise mit Phenyl oder Dichlorphenyl substituiert sein kann,

    - einen Aralkylteil, welcher einen Alkylteil mit 5 bis 14 Kohlenstoffatomen und einen Arylteil mit 6 bis 12 Kohlenstoffatomen aufweist und an dem Arylteil gegebenenfalls mit Halogenen, Alkylen und/oder Alkoxylen mit 1 bis 3 Kohlenstoffatomen substituiert ist,

- die Symbole Y' gleich oder verschieden sind und darstellen:

    - die Gruppe $R^1$,

    - und/oder eine epoxyfunktionelle Gruppe, welche mit dem Silizium des Polyorganosiloxans über einen zweiwertigen Rest mit 2 bis 20 Kohlenstoffatomen verbunden ist und mindestens ein Heteroatom, vorzugsweise Sauerstoff, enthalten kann,

    - wobei mindestens eines der Symbole Y' eine epoxyfunktionelle Gruppe darstellt,

(C) und 100 Teile (Trockenextrakt von etwa 65 Gew.-%) mineralische Füllstoffe.

**2.** Zusammensetzung nach Anspruch 1, **dadurch gekennzeichnet, daß** der Latex ausgehend von polymerisierbaren Monomeren (1), ausgewählt aus Styrol, Butadien, Acrylestern und/oder Vinylnitrilen, hergestellt wird.

**3.** Zusammensetzung nach Anspruch 2, **dadurch gekennzeichnet, daß** die Herstellung des Latex andere ethylenisch ungesättigte, mit den oben genannten Monomeren (1) polymerisierbare Monomere (2) umfaßt, deren Menge bis zu 40 Gew.-% der Gesamtmonomere betragen kann, wobei diese anderen Monomere (2) ausgewählt sind aus:

(a) Carbonsäurevinylestern, wie Vinylacetat, Vinylversatat und Vinylpropionat,

(b) ethylenisch ungesättigten Mono- und Dicarbonsäuren, wie Acrylsäure, Methacrylsäure, Itakonsäure, Maleinsäure, Fumarsäure und Monoalkylestern von Dicarbonsäuren des angeführten Typs mit Alkanolen mit vorzugsweise 1 bis 4 Kohlenstoffatomen und deren N-substituierten Derivaten,

(c) Amiden ungesättigter Carbonsäuren, wie Acrylamid, Methacrylamid, N-Methalolacrylamid oder -methacrylamid,

(d) ethylenischen Monomeren mit einer Sulfonsäuregruppe und deren Alkali- oder Ammoniumsalzen, beispielsweise Vinylsulfonsäure, Vinylbenzolsulfonsäure, $\alpha$-Acrylamidomethylpropansulfonsäure und 2-Sulfoethylenmethacrylat,

(e) ethylenisch ungesättigten Monomeren mit einer sekundären, tertiären oder quarternären Aminogruppe oder einer heterocyclischen stickstoffhaltigen Gruppe, beispielsweise Vinylpyridinen, Vinylimidazol, Aminoalkyl(meth-)acrylaten und Aminoalkyl(meth-)acrylamiden, wie Dimethylaminoethylacrylat oder -methacrylat, Ditert.-Butylaminoethylacrylat oder -methacrylat, Dimethylaminomethylacrylamid oder -methacrylamid, sowie zwitterionischen Monomeren, wie Sulfopropyl(dimethyl)aminopropyl,

(f) Estern von (Meth-)Acrylsäuren mit Alkandiolen mit vorzugsweise 2 bis 8 Kohlenstoffatomen, wie Glykolmono(meth-)acrylat, Hydroxypropylmono(meth-)acrylat und 1,4-Butandiolmono(meth-)acrylat, sowie Monomeren mit zwei polymerisierbaren Doppelbindungen, wie Ethylenglykoldimethacrylat.

**4.** Zusammensetzung nach Anspruch 3, **dadurch gekennzeichnet, daß** der Latex gewichtsbezogen aufweist:

- 25 bis 90 %, vorzugsweise 45 bis 75 %, Styrol und/oder Acrylnitril,
- 75 bis 10 %, vorzugsweise 55 bis 25 %, Butadien und/oder Acrylate,
- 0 bis 20 %, vorzugsweise 1 bis 10 %, ungesättigte Carbonsäure,
- und 0 bis 40 %, vorzugsweise 0 bis 15 %, andere ethylenisch ungesättigte Monomere.

**5.** Zusammensetzung nach einem der vorangehenden Ansprüche, **dadurch gekennzeichnet, daß** die epoxyfunktionellen Gruppen ausgewählt sind aus den folgenden Gruppen:

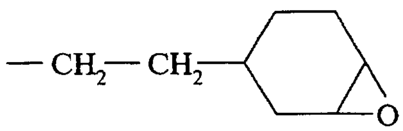 , 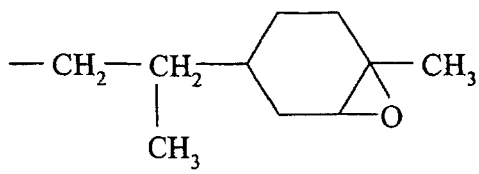 ,

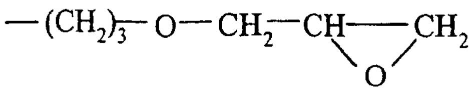 und 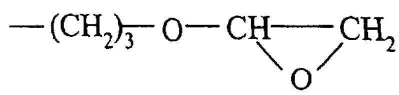

**6.** Zusammensetzung nach einem der vorangehenden Ansprüche, **dadurch gekennzeichnet, daß** die Beschichtung ein Lack bzw. eine Farbe ist.

**7.** Bindemittel für Lacke bzw. Farben auf Basis von:

(A) 3 bis 30 Teilen (Trockenextrakt von etwa 50 Gew.-%) eines Latex, welcher aus Teilchen organischer (Co-) Polymere besteht, mit einer Glasübergangstemperatur von -20 °C bis 50 °C,

(B) 0,05 bis 5 Teilen (Trockenextrakt von etwa 65 Gew.-%) einer Emulsion eines epoxyfunktionalisierten Polyorganosiloxans, welches aus Einheiten der Formel (I) besteht und terminiert ist mit Einheiten der Formel (II) und/oder aus Einheiten der Formel (I) besteht, wie sie jeweils nachfolgend dargestellt sind:

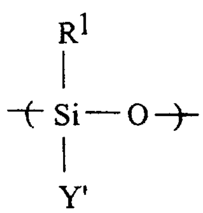 (I)

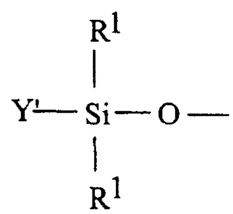 (II)

wobei

- die Symbole $R^1$ gleich oder verschieden sind und darstellen:
  - einen linearen oder verzweigten Alkylrest mit 1 bis 8 Kohlenstoffatomen, wobei die Alkylreste vorzugsweise Methyl, Ethyl, Propyl und Octyl sind,
  - einen gegebenenfalls substituierten Cycloalkylrest mit 5 bis 8 Ringkohlenstoffatomen,
  - einen Arylrest mit 6 bis 12 Kohlenstoffatomen, welcher vorzugsweise mit Phenyl oder Dichlorphenyl substituiert sein kann,

- einen Aralkylteil, welcher einen Alkylteil mit 5 bis 14 Kohlenstoffatomen und einen Arylteil mit 6 bis 12 Kohlenstoffatomen aufweist und an dem Arylteil gegebenenfalls mit Halogenen, Alkylen und/oder Alkoxylen mit 1 bis 3 Kohlenstoffatomen substituiert ist,

- die Symbole Y' gleich oder verschieden sind und darstellen:

  - die Gruppe $R^1$,

  - und/oder eine epoxyfunktionelle Gruppe, welche mit dem Silizium des Polyorganosiloxans über einen zweiwertigen Rest mit 2 bis 20 Kohlenstoffatomen verbunden ist und mindestens ein Heteroatom, vorzugsweise Sauerstoff, enthalten kann,

  - wobei mindestens eines der Symbole Y' eine epoxyfunktionelle Gruppe darstellt.

**8.** Verwendung einer Emulsion eines epoxyfunktionalisierten Polyorganosiloxans, wie in dem vorangehenden Anspruch definiert, zur Herstellung eines Bindemittels für Lacke bzw. Farben.

**9.** Verwendung einer Emulsion eines epoxyfunktionalisierten Polyorganosiloxans, wie in Anspruch 7 definiert, als wasserabweisendes Additiv zur Herstellung eines Bindemittels für Lacke bzw. Farben.

## Claims

**1.** Coating composition comprising:

(A) 3 to 30 parts (solids content at approximately 50% by weight) of a latex composed of particles of organic (co)polymers exhibiting a glass transition temperature of between -20°C and 50°C,
(B) 0.05 to 5 parts (solids content at approximately 65% by weight) of an emulsion of epoxyfunctionalized polyorganosiloxane composed of units of formula (I) and terminated by units of formula (II) and/or composed of units of formula (I) which are represented below:

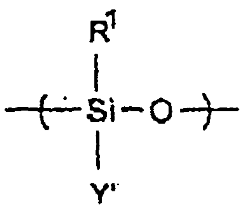 (I)

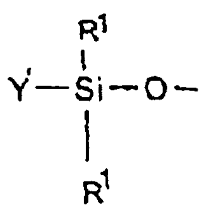 (II)

in which:

- the $R^1$ symbols are alike or different and represent:

  - a linear or branched alkyl radical comprising from 1 to 8 carbon atoms, the alkyl radicals preferably being methyl, ethyl, propyl and octyl,
  - a cycloalkyl radical comprising between 5 and 8 cyclic carbon atoms which is optionally substituted,
  - an aryl radical comprising between 6 and 12 carbon atoms which can be substituted, preferably phenyl or dichlorophenyl,
  - an aralkyl part having an alkyl part comprising between 5 and 14 carbon atoms and an aryl part comprising between 6 and 12 carbon atoms which is optionally substituted on the aryl part by halogens, alkyls and/or alkoxyls comprising 1 to 3 carbon atoms,

- the Y' symbols are alike or different and represent:

  - the $R^1$ group,
  - and/or an epoxyfunctional group, connected to the silicon of the polyorganosiloxane via a divalent

radical comprising from 2 to 20 carbon atoms which can comprise at least one heteroatom, preferably oxygen,

and at least one of the Y' symbols representing an epoxyfunctional group,
(C) and 100 parts (solids content at approximately 75% by weight) of inorganic fillers.

**2.** Composition according to Claim 1, **characterized in that** the latex is prepared from (1) polymerizable monomers chosen from styrene, butadiene, acrylic esters and/or vinyl nitriles.

**3.** Composition according to Claim 2, **characterized in that** the latex preparation comprises other ethylenically unsaturated monomers (2) which can be polymerized with the above monomers (1), the amount of which can range up to 40% by weight of the total of the monomers, the other monomers being chosen from:

(a) carboxylic acid vinyl esters, such as vinyl acetate, vinyl versatate or vinyl propionate,
(b) unsaturated ethylenic mono- and dicarboxylic acids, such as acrylic acid, methacrylic acid, itaconic acid, maleic acid or fumaric acid, and monoalkyl esters of the dicarboxylic acids of the type mentioned with alkanols preferably having 1 to 4 carbon atoms and their N-substituted derivatives,
(c) amides of unsaturated carboxylic acids, such as acrylamide, methacrylamide, N-methylolacrylamide or -methacrylamide,
(d) ethylenic monomers comprising a sulphonic acid group and its alkali metal or ammonium salts, for example vinylsulphonic acid, vinylbenzenesulphonic acid, α-acrylamidomethylpropanesulphonic acid or 2-sulphoethylene methacrylate,
(e) ethylenically unsaturated monomers comprising a secondary, tertiary or quaternary amino group or a heterocyclic group comprising nitrogen, for example vinylpyridines, vinylimidazole, aminoalkyl (meth)acrylates and aminoalkyl(meth)acrylamides, such as dimethylaminoethyl acrylate or methacrylate, di-tert-butylaminoethyl acrylate or methacrylate, dimethylaminomethylacrylamide or -methacrylamide, as well as zwitterionic monomers, such as sulphopropyl(dimethyl)aminopropyl acrylate,
(f) esters of (meth) acrylic acids with alkanediols preferably comprising 2-8 carbon atoms, such as glycol mono (meth)acrylate, hydroxypropyl mono(meth)acrylate or 1,4-butanediol mono(meth)acrylate, and monomers comprising two polymerizable double bonds, such as ethylene glycol dimethacrylate.

**4.** Composition according to Claim 3, **characterized in that** the latex comprises, by weight:

- 25-90% and preferably 45-75% of styrene and/or acrylonitrile,
- 75-10% and preferably 55-25% of butadiene and/or acrylates,
- 0-20% and preferably 1-10% of unsaturated carboxylic acid,
- and 0-40% and preferably 0-15% of other unsaturated ethylenic monomers.

**5.** Composition according to any one of the preferred claims, **characterized in that** the epoxyfunctional groups are chosen from the following groups:

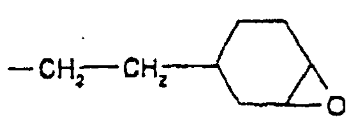 . 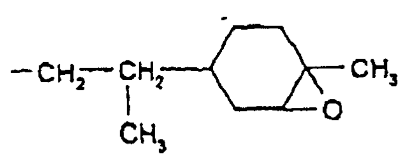 .

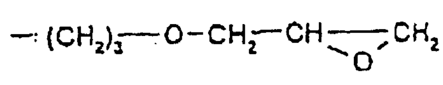 and 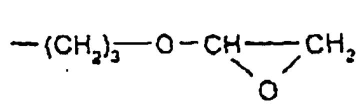

**6.** Composition according to any one of the preceding claims, **characterized in that** the coating is a paint.

**7.** Paint binder based on:

(A) 3 to 30 parts (solids content at approximately 50% by weight) of a latex composed of particles of organic (co)polymers exhibiting a glass transition temperature of between -20°C and 50°C,
(B) 0.05 to 5 parts (solids content at approximately 65% by weight) of an emulsion of epoxyfunctionalized polyorganosiloxane composed of units of formula (I) and terminated by units of formula (II) and/or composed of units of formula (I) which are represented below:

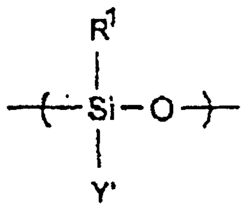 (I)

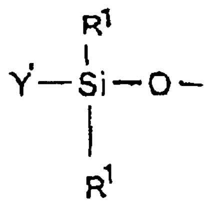 (II)

in which:

- the $R^1$ symbols are alike or different and represent:
    - a linear or branched alkyl radical comprising from 1 to 8 carbon atoms, the alkyl radicals preferably being methyl, ethyl, propyl and octyl,
    - a cycloalkyl radical comprising between 5 and 8 cyclic carbon atoms which is optionally substituted,
    - an aryl radical comprising between 6 and 12 carbon atoms which can be substituted, preferably phenyl or dichlorophenyl,
    - an aralkyl part having an alkyl part comprising between 5 and 14 carbon atoms and an aryl part comprising between 6 and 12 carbon atoms which is optionally substituted on the aryl part by halogens, alkyls and/or alkoxyls comprising 1 to 3 carbon atoms,
- the Y' symbols are alike or different and represent:
    - the $R^1$ group,
    - and/or an epoxyfunctional group, connected to the silicon of the polyorganosiloxane via a divalent radical comprising from 2 to 20 carbon atoms which can comprise at least one heteroatom, preferably oxygen,
    - and at least one of the Y' symbols representing an epoxyfunctional group.

**8.** Use of an emulsion of epoxyfunctionalized polyorganosiloxane as defined in the preceding claim for the preparation of a paint binder.

**9.** Use of an emulsion of epoxyfunctionalized polyorganosiloxane as defined in Claim 7 as water-repelling additive for the preparation of a paint binder.